**Europäisches Patentamt**

**European Patent Office**

**Office européen des brevets**

(11) Veröffentlichungsnummer : **0 088 909**
**B1**

(12) **EUROPÄISCHE PATENTSCHRIFT**

(45) Veröffentlichungstag der Patentschrift :
22.01.86

(51) Int. Cl.⁴ : **H 02 K 49/10**

(21) Anmeldenummer : **83101677.9**

(22) Anmeldetag : **22.02.83**

(54) **Vorrichtung zur Übertragung von Kräften.**

(30) Priorität : **17.03.82 DE 3209663**

(43) Veröffentlichungstag der Anmeldung :
**21.09.83 Patentblatt 83/38**

(45) Bekanntmachung des Hinweises auf die Patenterteilung : **22.01.86 Patentblatt 86/04**

(84) Benannte Vertragsstaaten :
**CH FR GB IT LI**

(56) Entgegenhaltungen :
**DE-A- 2 650 294**
**DE-A- 2 847 618**
**DE-C- 868 022**
**US-A- 3 483 412**

(73) Patentinhaber : **Franz Klaus Union Armaturen Pumpen GmbH & Co.**
**Blumenfeldstrasse 18**
**D-4630 Bochum 1 (DE)**

(72) Erfinder : **Klaus, Franz**
**Dürer Strasse 12 .**
**D-4630 Bochum (DE)**

(74) Vertreter : **Patentanwälte Wenzel & Kalkoff**
**Ruhrstrasse 26 Postfach 2448**
**D-5810 Witten (DE)**

Jouve, 18, rue St-Denis, 75001 Paris, France

**Beschreibung**

Die Erfindung betrifft eine als Kupplung ausgebildete Vorrichtung zur Übertragung von Kräften mit zwei ineinanderliegenden Zylindern, deren einander zugekehrte Mantelflächen mit der gleichen Zahl von einander gegenüberliegenden Permanentmagneten besetzt sind und von denen der eine Zylinder rotierend angetrieben wird, und gegebenenfalls mit einem sogenannten Spaltrohr oder Spalttopf in dem zylindrischen Zwischenraum zwischen den Permanentmagneten, wobei die jeweils einem Zylinder zugeordneten Magnete entweder als nebeneinanderliegende Plättchen oder als einteiliger Ring ausgebildet sind, dessen Magnetisierung im Ergebnis der der Gesamtzahl der Plättchen entspricht.

Derartige Vorrichtungen haben sich in bestimmten Anwendungsfällen bewährt. Dazu gehören sogenannte gekapselte oder stopfbüchslose Pumpen, bei denen der getriebene Teil der Vorrichtung innerhalb eines Spalttopfes auf eigenen Lagern rotiert, so daß das gegebenenfalls unverträgliche Medium an keiner Stelle mit einer sich bewegenden Dichtung in Berührung kommt. Derartige Pumpen werden bevorzugt in der chemischen Industrie eingesetzt.

Herkömmliche Kreiselpumpen, die das zu fördernde Medium axial ansaugen und radial unter Druck abgeben, benötigen einen Axialschubausgleich, um das Ungleichgewicht der in axialer Richtung auf den Läufer einwirkenden Kräfte auszugleichen. Dies kann über hydraulische Hilfen bewirkt werden oder die Axialkräfte müssen durch die Lagerung des Läufers aufgenommen werden. In der Regel tritt in der täglichen Praxis ein Mischfall ein, bei dem zwar der Axialschub hydraulisch weitgehend beseitig ist, so daß nur ein gegebenenfalls variierender Restschub von der Lagerung aufgenommen werden muß.

Rein theoretisch bringt eine Permanentmagnetkupplung in zylindrischer Bauweise den Vorteil mit sich, daß die Kupplung gegen eine Verschiebung beider Kupplungsteile in Axialrichtung eine selbsttätige Gegenkraft entwickelt aufgrund des sich ändernden Überdeckungsgrades der jeweils den Kupplungshälften zugeordneten Magnete. Es hat sich in der Praxis jedoch gezeigt, daß selbst bei Kupplungen, die ein sehr hohes Drehmoment zu übertragen vermögen, die axialen Rückstellkräfte nicht ausreichen, um alle in der Praxis auftretenden Schwankungen des Rest-Axialschubes aufzunehmen. Nach wie vor sind deshalb Axiallager in derartigen Anordnungen erforderlich.

Es ist demnach Aufgabe der Erfindung, eine als Kupplung ausgebildete Vorrichtung zur Übertragung von Kräften der eingangs genannten Art vorzuschlagen, die bei gleichem Aufwand und unter Beibehaltung der übertragbaren Momente auch eine beachtliche Rückstellkraft in Axialrichtung aufweist.

Zur Lösung dieser Aufgabe wird vorgeschlagen, daß die Grenze zwischen zwei benachbarten Magnetplättchen bzw. zwischen zwei benachbarten Magnetzonen bei einem einzigen Ring wendelförmig verläuft.

Bei den bisher bekannten Vorrichtungen bzw. Permanentmagnetkupplungen verlaufen die jeweiligen Grenzen zwischen zwei benachbarten Magneten bzw. Magnetzonen ein und desselben Zylinders parallel zu einer axialen Zylinder-Mantellinie. Bei einer axialen Verschiebung des einen Zylinders gegenüber dem anderen kommt es dabei zu einer Rückstellkraft in die ursprüngliche Lage, die bei geringen Abweichungen auch nur einen geringen Betrag erreicht. Hier schafft die Erfindung Abhilfe. Aufgrund der wendelförmig verlaufenden Magnete bzw. Magnetzonen tritt im Falle einer axialen Abweichung von der Sollage eine Verschiebung der zueinander korrespondierenden Magnete bzw. Magnetzonen ein, die sich nicht nur an den Stirnseiten, sondern auch sehr stark an den Grenzseiten auswirkt, so daß die Rückstellkräfte entsprechend groß sind.

Der Winkel zwischen den jeweiligen Grenzen und einer axialen Zylinder-Mantellinie kann bis zu 45° betragen, für normale Anwendungsfälle genügen jedoch ca. 15°, um bereits eine beachtliche Rückstellkraft in Axialrichtung aufzubringen bei einer entsprechend geringen Auslenkung. Die erfindungsgemäße Anordnung der Magnete bzw. Magnetzonen ist nicht auf einen einzigen Magnetkranz oder Magnetring eines Zylinders beschränkt, sondern es können mehrere Ringe oder Kränze von Magneten nebeneinander auf ein und demselben Zylinder angeordnet sein, um das Drehmoment und aufgrund des erfindungsgemäßen Vorschlages auch die Axial-Rückstellkräfte zu vergrößern. Dabei können die Grenzen innerhalb eines Kranzes oder eines Ringes gleichsinnig oder gegensinnig in bezug auf die benachbarten Kränze oder Ringe desselben Zylinders verlaufen. In jedem Fall kommt es bei einer axialen Relativbewegung zwischen beiden Kupplungshälften zu der genannten Verschiebung der korrespondierenden Magnete, bzw. Magnetzonen zueinander auch entlang der Grenzkante, so daß mit jedem zusätzlichen Kranz bzw. Ring auch die axialen Rückstellkräfte ansteigen.

Nachfolgend werden Ausführungsbeispiele der Erfindung, die in der Zeichnung dargestellt sind, näher erläutert ; darin bedeuten :

Figur 1   eine isometrische Ansicht zweier Kupplungshälften in auseinandergezogener Darstellung mit einer erfindungsgemäßen Magnetbesetzung,

Figur 2   eine Draufsicht auf eine Abwicklung der Magnetanordnung gemäß der Erfindung in einem ersten Ausführungsbeispiel,

Figur 3   eine Ansicht gemäß Fig. 2 eines weiteren Anordnungsbeispiels,

Figur 4   eine Ansicht gemäß Fig. 2 eines dritten Anordnungsbeispiels für die Magnete,

Figur 5   eine Ansicht gemäß Fig. 2 eines vierten Anordnungsbeispiels und

Figur 6 eine schematische Darstellung eines einzigen Permanentmagneten zur Veranschaulichung der Rückstellwirkung.

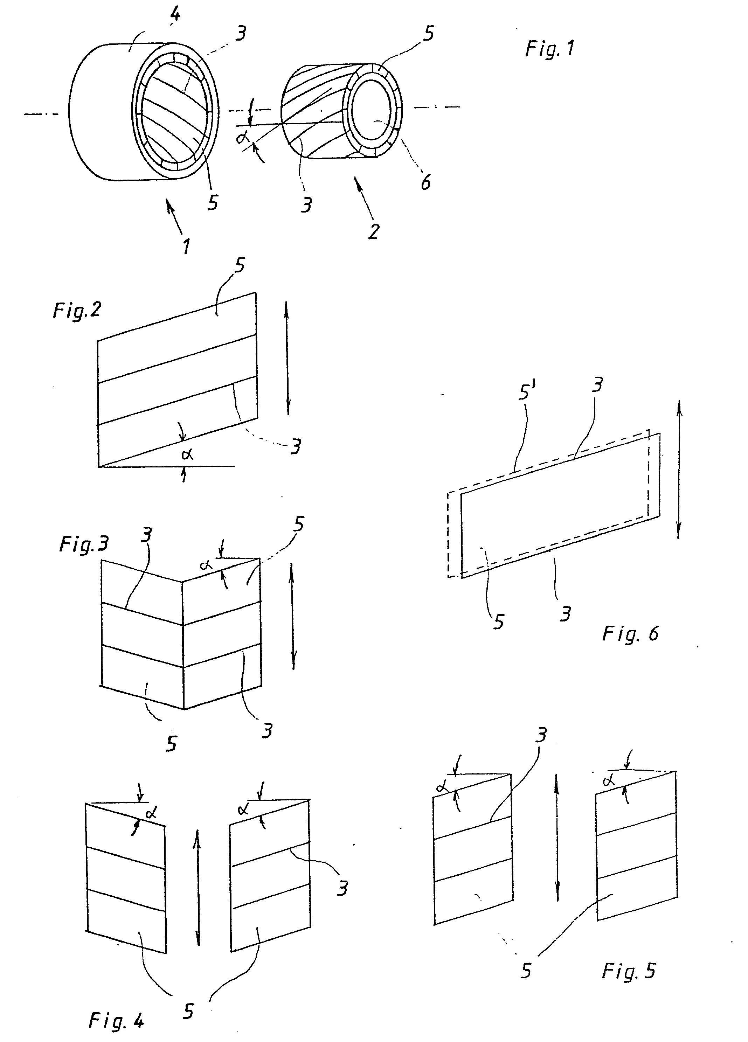

In der Fig. 1 ist schematisch eine erfindungsgemäße Vorrichtung auseinandergezogen dargestellt. Sie besteht im wesentlichen aus einem Außenzylinder 1 und einem Innenzylinder 2, die in üblicher Weise gelagert sind (nicht dargestellt) und in ihrer Betriebslage ineinanderliegend angeordnet sind. Bei einem typischen Anwendungsbeispiel innerhalb einer Pumpe wird der Außenzylinder 1 angetrieben und der Innenzylinder 2 aufgrund von Magnetplättchen 5 mitgenommen, die an den einander zugewandten Seiten der Zylinder 1 und 2 angebracht sind. Der Innenzylinder 2 befindet sich dabei oftmals innerhalb eines Spalttopfes (nicht dargestellt), was jedoch im Zusammenhang mit der Erfindung ohne Bedeutung ist.

In der Fig. 1 bestehen die Magnete aus jeweils zwölf sphärisch gekrümmten Magnetplättchen 5, die entlang einer Grenze 3 aneinander anliegen. Die Grenzen 3 verlaufen wendelförmig unter einem Winkel α zu den axialen Zylinder-Mantellinien innerhalb eines Mantels 4 bzw. entlang einer Hülse 6 an dem Außenzylinder 1 bzw. an dem Innenzylinder 2.

In den Fig. 2-5 sind Ausschnitte von Abwicklungen der Magnetbesetzung des Außenzylinders 1 bzw. des Innenzylinders 2 dargestellt, wobei der in jeder Figur dargestellte Pfeil die Drehrichtung angibt. Die Anordnung gemäß der Fig. 2 entspricht der der Fig. 1. Es ist also jeweils ein einziger Kranz von Magneten 5 vorhanden, der aus einzelnen Plättchen besteht. In der Fig. 3 sind zwei Kränze vorhanden, wobei die Grenzen gegensinnig zueinander verlaufen, also in dem einen Magnetkranz nach Art eines Rechtsgewindes und in dem anderen Magnetkranz nach Art eines Linksgewindes. Die Anordnung gemäß der Fig. 4 unterscheidet sich von der gemäß der Fig. 3 dadurch, daß beide Magnetkränze auseinandergerückt sind. Schließlich ist in der Fig. 5 eine Anordnung dargestellt, die einer Verdopplung der Anordnung gemäß der Fig. 2 entspricht, was nur infrage kommt, wenn die Zylinder 1 und 2 entsprechend lang ausgebildet sind.

Statt eines Magnetkranzes kann auch jeweils ein einziger Ring vorhanden sein, der dann jeweils so magnetisiert ist, daß im Ergebnis eine Magnetisierung gemäß der Gesamtheit der Einzelmagnete eines Magnetkranzes entspricht. In jedem Fall ist die Magnetisierung so gewählt, daß die Magnetlänge radial verläuft und daß zu beiden Seiten einer Grenze unterschiedliche Pole vorhanden sind, also innerhalb eines Kranzes bzw. Ringes eine abwechselnde Polung vorherrscht. Entsprechendes gilt für den anderen Zylinder, wobei in der Betriebslage sich gegenteilige Pole der sich entsprechenden Magnete gegenüberliegen.

Anhand der Fig. 6 wird die Wirkung der erfindungsgemäßen Magnetanordnung besonders deutlich. In ausgezogenen Linien ist ein einziges Magnetplättchen 5 dargestellt, das dem Außenzylinder 1 zugeordnet sein soll. In gestrichelten Linien ist ein weiteres Magnetplättchen 5' leicht axial verschoben gezeigt, das dem Innenzylinder 2 zugeordnet sein soll. Es ist zu erkennen, daß nicht nur eine fehlende Überdeckung beider Magnetplättchen 5 und 5' an den schmalen Stirnseiten, sondern auch entlang der Grenze 3 vorhanden ist, so daß entlang dieser relativ langen Kante ebenfalls eine Rückstellkraft zu einer kongruenten Deckungslage entsteht, die wegen der Länge der Kante besonders kräftig ist. Die übertragbaren Drehmomentkräfte werden dadurch so gut wie nicht beeinträchtigt.

Die erfindungsgemäße Vorrichtung ist nicht nur geeignet zum Ausgleich von Axialkräften bei Pumpenläufern, sondern sie kann auch beispielsweise zur Kompensation des Eigengewichtes eines Läufers eingesetzt werden, wenn die gesamte Vorrichtung mit ihrer Mittelachse vertikal angeordnet ist. Dabei ist unter Läufer allgemein ein Bauteil zu verstehen, das von der erfindungsgemäßen Vorrichtung angetrieben wird und nicht nur der Läufer einer Pumpe.

**Patentansprüche**

1. Als Kupplung ausgebildete Vorrichtung zur Übertragung von Kräften mit zwei ineinanderliegenden Zylindern (1, 2) deren einander zugekehrte Mantelflächen mit der gleichen Zahl von einander gegenüberliegenden Permanentmagneten (5) besetzt sind und von denen der eine Zylinder rotierend angetrieben wird, und gegebenenfalls mit einem sogenannten Spaltrohr oder Spalttopf in dem zylindrischen Zwischenraum zwischen den Permanentmagneten, wobei die jeweils einem Zylinder zugeordneten Magnete entweder als nebeneinanderliegende Plättchen oder als einteiliger Ring ausgebildet sind, dessen Magnetisierung im Ergebnis der der Gesamtzahl der Plättchen entspricht, dadurch gekennzeichnet, daß die Grenze (3) zwischen zwei benachbarten Magnetplättchen (5) bzw. zwischen zwei benachbarten Magnetzonen bei einem einzigen Ring wendelförmig verläuft.

2. Vorrichtung nach Anspruch 1, dadurch gekennzeichnet, daß der Winkel α zwischen der jeweiligen Grenze (3) und einer axialen Zylinder-Mantellinie in einem Bereich von einigen Grad bis 45° liegt, insbesondere 15° beträgt.

3. Vorrichtung nach Anspruch 1 oder 2, dadurch gekennzeichnet, daß jeder Zylinder (1, 2) mehrere Magnetkränze bzw. Ringe aufweist.

4. Vorrichtung nach Anspruch 3, dadurch gekennzeichnet, daß die jeweiligen Grenzen (3) innerhalb eines Kranzes oder eines Ringes gleichsinnig oder gegensinnig in bezug auf die benachbarten Kränze oder Ringe desselben Zylinders (1, 2) verlaufen.

**Claims**

1. A device made as a coupling for the transmi- sion of forces, having two cylinders (1, 2) lying one inside the other, the facing surfaces of which are occupied by equal numbers of permanent magnets (5) lying opposite one another, one of the cylinders being driven in rotation, and if necessary having a so-called gap-tube or gap-pot in the cylindrical interstice between the permanent magnets, where the magnets associated respectively with one cylinder are made either as small plates lying side by side or as a ring in one piece the resultant magnetization of which corresponds with that of the total number of small plates, characterized in that the boundaries (3) between two adjacent small plate magnets (5) or respectively between two adjacent magnetic zones in the case of one single ring run helically.

2. A device as in Claim 1, characterized in that the angle $\alpha$ between the respective boundaries (3) and an axial generatrix of the cylinder lies within a range of a few degrees up to 45° and amounts in particular to 15°.

3. A device as in Claim 1 or 2, characterized in that each cylinder (1, 2) exhibits a number of magnet collars or rings.

4. A device as in Claim 3, characterized in that the respective boundaries (3) within one collar or one ring run in the same sense or in the opposite sense with respect to the adjacent collars or rings on the same cylinder (1, 2).

**Revendications**

1. Dispositif ayant la configuration d'un dispositif d'accouplement pour la transmission de forces comprenant deux cylindres emboîtés l'un dans l'autre (1, 2), les surfaces des corps des cylindres tournées l'une vers l'autre étant pourvues du même nombre d'aimants permanents situés les uns en face des autres, l'un de ces cylindres étant entraîné de manière rotative, et comprenant éventuellement ce qu'il est convenu d'appeler une gaine ou un pot dans l'espace intermédiaire cylindrique se trouvant entre les aimants permanents, les aimants correspondant respectivement à un cylindre étant configurés ou bien comme des plaquettes situées les unes à côté des autres ou bien comme un anneau d'un seul tenant dont l'aimantation résultant correspond à celle du nombre total des plaquettes, caractérisé en ce que la limite (3) entre deux plaquettes voisines d'aimants (5) ou entre deux zones magnétiques voisines d'un seul et même anneau a une allure hélicoïdale.

2. Dispositif selon la revendication 1, caractérisé en ce que l'angle entre la limite respective (3) et une génératrice axiale des cylindres est de l'ordre de quelques degrés à 45° et qu'il est en particulier de 15°.

3. Dispositif selon la revendication 1 ou 2, caractérisé en ce que chaque cylindre (1, 2) présente plusieurs couronnes ou anneaux magnétiques.

4. Dispositif selon la revendication 3, caractérisé en ce que les limites respectives (3) à l'intérieur d'une couronne ou d'un anneau sont de même sens ou de sens contraire par rapport aux couronnes voisines ou aux anneaux voisins du même cylindre (1, 2).

Fig. 1

Fig. 2

Fig. 3

Fig. 6

Fig. 4

Fig. 5